# EUROPÄISCHE PATENTSCHRIFT

(11) **EP 2 167 930 B1**
(45) Veröffentlichungstag und Bekanntmachung des Hinweises auf die Patenterteilung: **03.10.2018**
(21) Anmeldenummer: 08774639.2
(22) Anmeldetag: 02.07.2008
(51) Int. Cl.: G01L 9/00, B60T 8/36, G01L 19/14

(54) **ANSCHLUSSEINHEIT FÜR EINE DRUCKMESSZELLE**
CONNECTION UNIT FOR A PRESSURE MEASURING CELL
UNITÉ DE RACCORDEMENT POUR UNE CELLULE DE MESURE DE PRESSION

(30) Priorität: 10.07.2007 DE 102007031980
(43) Veröffentlichungstag der Anmeldung: 31.03.2010
(73) Patentinhaber: Robert Bosch GmbH, 70442 Stuttgart (DE)
(72) Erfinder: SCHLITZKUS, Michael, 87463 Dietmannsried (DE); KOPF, Stefan, 87545 Burgberg (DE); ROHDE, Hartmut, 87448 Waltenhofen (DE); KAISER, Harry, 71706 Markgroeningen (DE); MUEHLBEYER, Peter, 74360 Ilsfeld (DE)
(86) Internationale Anmeldenummer: PCT/EP2008/058505
(87) Internationale Veröffentlichungsnummer: WO 2009/007286

(56) Entgegenhaltungen:
- EP-A2- 0 710 827
- WO-A-03/064230
- WO-A-2008/122457
- WO-A-2008/122464
- WO-A-2008/122465
- DE-A1- 10 244 760
- DE-A1- 10 326 389
- DE-A1-102005 046 008
- DE-U1-202005 011 253
- DE-U1-202005 017 626
- JP-A- H08 201 203
- JP-A- H08 261 857
- D.MOSER, J. KRAUSE, HARTING MITRONICS AG: "3d-MID -Multifunctional Packages for Sensors in Automotive Applications" [Online] 31. Juli 2006 (2006-07-31), SPRINGER BERLIN HEIDELBERG , XP002504081 ISBN: 978-3-540-33410-1 Gefunden im Internet: URL:http://wwwspringerlink.com/content/p7u 7q52430241625/> das ganze Dokument
- M. EISENBARTH, K. FELDMANN: "Pressfit Technology for 3-D Molded Interconnect Devices (MID) - A lead free Alternative to Solder Joints - Challenges and Solutions Concepts" SEMI TECHNOLOGY SYMPOSIUM: INTERNATIONAL ELECTRONICS MANUFACTURING TECHNOLOGY SYMPOSIUM, 2002, Seiten 238-244, XP002504898

## Beschreibung

### Stand der Technik

Die Erfindung geht aus von einer Anschlusseinheit für eine Druckmesszelle nach der Gattung des unabhängigen Anspruchs. Aus der DE 10 2004 033 846 A1 ist bereits ein Ventil mit integriertem Drucksensor bekannt. In einem Ventil zur Steuerung von Fluiden, wie beispielsweise für Bremsanlagen eines Kraftfahrzeugs, ist ein Drucksensor integriert, um den Druck des durch das Ventil gesteuerten Fluids zu erfassen. Durch eine Bohrung im Polkern des Ventildoms wird der Druck der Hydraulikflüssigkeit auf die Messmembran der Messzelle übertragen. In einer Leiterplatte sind mehrere Durchgangsbohrungen ausgebildet, durch welche die elektrischen Kontakte des Drucksensors und/oder des elektrischen Teils des Ventils hindurch geführt sind.

Aus der DE 101 22 330 A1 ist eine Bremsvorrichtung mit integriertem Drucksensormodul bekannt. Sie umfasst ein zusammengesetztes Steuergerät, bei dem eine erste steckbare Gehäuseeinheit, welche im Wesentlichen die elektronischen Bauelemente auf einem oder mehreren Bauteilträgern beinhaltet, mit einem blockförmigen Massivteil an einer ersten Oberfläche des Massivteils zur Herstellung einer magnetischen und elektrischen Verbindung zusammengesteckt ist, wobei das Massivteil magnetisch betätigte Hydraulikventile zur Ansteuerung von Bremsen und Hydraulikleitungen aufweist. Es sind weiterhin Drucksensoren zur Messung des Drucks in den Hydraulikleitungen an geeigneten Messpunkten vorgesehen, die in dem zusammengesetzten Steuergerät integriert sind.

Aus der DE 103 26 389 A1 ist eine Drucksensorvorrichtung mit Stiften bekannt, die mit einer Dehnungsmessanordnung ausgestattet sind. Ein erstes Ende eines jeden hohlen Stiftes enthält eine Membran und ein Dehnungsmessgerät, das beispielsweise als Sensorchip auf die Membran aufgeklebt ist. Ein zweites Ende jedes Stiftes enthält eine Öffnung. Ein Gehäuse enthält eine Vielzahl von einen Stift aufnehmenden Durchgangsöffnungen, wobei jede den entsprechenden Stift aufnimmt. Ferner ist ein Dichtungsbauteil in jeder einen Stift aufnehmenden Durchgangsöffnung in Kontakt mit der Endfläche des zweiten Endes des Stiftes angeordnet. Jedes Dichtelement dichtet zwischen einer zu überprüfenden Vorrichtung und der Endfläche bei dem zweiten Ende des Stiftes, wenn das Gehäuse und die Stifte über der zu prüfenden Vorrichtung platziert werden können. Ferner ist eine als Leiterplatte ausgeführte Platine im Gehäuse befestigt. Die Leiterplatte verarbeitet Ausgangssignal vom Sensorchip jedes Stiftes. Auf der Leiterplatte sind IC-Gehäuse und Kondensatoren angeordnet und der Sensorchip eines jeden Stiftes ist durch Drähte, z.B. Drahtbonden, mit den entsprechenden Kontaktflächen der Leiterplatte verbunden. Zudem sind Übertragungsstifte, welche externe elektrische Verbindungen herstellen, elektrisch und mechanisch mit den entsprechenden Teilen in einem äußeren Umfang der Leiterplatte beispielsweise durch Lotmaterial verbunden. Auf diese Weise werden elektrische Signale von dem Sensorchip in der Leiterplatte verarbeitet und von der Leiterplatte durch die Übertragungsstifte ausgegeben.

Aus der WO03/064230 ist ein in eine elektro-hydraulische Steuereinheit integrierter Drucksensor bekannt. Der Drucksensor umfasst ein zylindrisches Unterteil, welches in einer Bohrung in einem Hydraulikblock angeordnet ist, um einen Druck im Hydraulikblock zu erfassen. Ein zentrales Sensorteil umfasst auf einer Membran angeordnete Dehnungsmessmittel mit einer resistiven Brückenanordnung, welche druckbedingte Veränderungen der Membran erfassen und in ein elektrisches Drucksignal umwandeln, und eine Leiterplatte mit einer elektronischen Schaltung zur Aufbereitung der erfassten Drucksignale. Des Weitern umfasst der Drucksensor einen elektrischen Stecker, der sich an das zentrale Sensorteil anschließt. Der Stecker umfasst eine zentrale Elektrode und zwei konzentrisch um die zentrale Elektrode angeordnete Elektroden, welche durch Isoliermaterial voneinander getrennt sind. Die unteren Enden der Elektroden sind mit den elektrischen Komponenten der Dehnungsmessmittel verbunden. Die Art der elektrischen Verbindung zwischen den Dehnungsmessmitteln und der elektronischen Schaltung bzw. den Elektroden wird nicht beschrieben.

Aus D. Moser, J. Krause, Harting Mitronics AG: "3d-MID- Multifunctional Packages for Sensors in Automotive Applications", 31. Juli 2006, Springer Berlin Heidelberg, XP002504081, ISBN: 978-3-540-33410-1, wird die MID-Technologie (MID: Molded Interconnect Device) zur Herstellung von Druck- und Durchflusssensoren für die Motorsteuerung, für Klimaanlagen und zur Crash-Erkennung beschrieben.

Aus DE 20 2005 011 253 U1 ist ein 3-D-Drucksensor bekannt. Der 3-D-Drucksensor umfasst einen Drucksensorchip in einem Gehäuse und Einrichtungen zur Sensorsignalverarbeitung aus aktiven und passiven Bauelementen, die als ASIC-Schaltkreis ausgeführt und mit dem Drucksensorchip verbunden sind. Der Drucksensorchip und der ASIC-Schaltkreis sind übereinander auf einer Seite eines Schaltungsträgers montiert, derart, dass der ASIC-Schaltkreis an einem Funktionselement über dem Drucksensor angeordnet ist, dessen Rückseite mit dem zu messenden Drucksystem verbunden ist. Auf der Innen- und Außenseite des Funktionselements sind Leiterbahnen angeordnet, die sich nach unten bis zu dessen Rand erstrecken und jeweils mit einem Pad zu elektrischen Verbindung mit einem Kontakt auf dem Schaltungsträger enden, wobei der auf dem Funktionsträger innen oder außen montierte ASIC-Schaltkreis bzw. der innen montierte Drucksensorchip über Drahtbrücken mit den Leiterbahnen verbunden sind.

Aus der DE 20 2005 017 626 U1 ist ein Drucksensor-Bauteil mit einem als spritzgegossenes Kunststoffteil ausgeführten ersten wannenförmigen Gehäuseteil bekannt. Im wannenförmigen Gehäuseteil sind sowohl Leiterbahnen als auch im Inneren wenigstens eine Trägerfläche als MID-Gehäuseteil aufweist. Auf der Trägerfläche ist ein über Bonddrähte mit den Leiterbahnen verbundenes Drucksensorbauelement angeordnet, wobei das erste Gehäuseteil eine Öffnung für das Drucksensorelement aufweist, so dass das Medium über die Öffnung zum Drucksensorelement gelangen kann. Zudem ist ein Chip mit Auswertelektronik auf der Trägerfläche angeordnet. Die Kontakte des Drucksensorbauelements und die Kontakte der Auswerteelektronik sind über gebondete Drahtbrücken und Leiterbahnen miteinander und über gebondete Drahtbrücken und nach außen führenden Leiterbahnen als Anschlusskontakte des Drucksensor-Bauteils verbunden.

Aus der DE 10 2005 046 008 A1 ist ein Halbeitersensorbauteil mit Sensorchip bekannt. Der Sensorchip weist auf seiner Oberseite einen Sensorbereich und Kontaktflächen auf und ist einem Hohlraumgehäuse angeordnet, welches Seitenwände und einen Gehäuseboden aufweist. Das Hohlraumgehäuse weist Außenkontakte außerhalb des Hohlraums auf und besitzt Kontaktanschlussflächen auf einer dem Hohlraum zugewandten Oberseite des Gehäusebodens. Der Sensorchip ist derart in eine gummielastische Kunststoffmasse innerhalb des Hohlraums des Hohlraumgehäuses eingebettet, dass er mit seinem Sensorbereich dem Gehäuseboden zugewandt ist, wobei die Kontaktflächen des Sensorchips an elastischen Flip Chip-Kontakte angeschlossen sind, die mit den Kontaktanschlussflächen auf dem Gehäuseboden elektrisch in Verbindung stehen.

Aus der DE 102 44 760 A1 ist eine Drucksensorbaugruppe bekannt. Die im Wesentlichen zylinderförmige Drucksensorbaugruppe weist eine elektrische Verbindung für ein Messelement auf, welche durch eine Öffnung in einem Kontaktträger geführt ist und die mit mehreren Kontakten des Kontaktträgers verbunden ist, wobei die Kontakte abschnittsweise im Kontaktträger eingebettet sind. Die elektrischen Kontakte an der dem Messelement abgewandten Stirnseite des Kontaktträgers weisen mehrere nicht in den Kontaktträger eingebettete Kontaktflächen auf, die von mehreren vorzugweise lotrecht in das Drucksensorgehäuse gerichteten Kontaktstiften beaufschlagt sind. Die Kontaktstifte erstrecken sich zu einer Sensorelektronik, die außerhalb des Drucksensorgehäuses in einem von der Vorrichtung beabstandeten Reglergehäuse angeordnet ist.

Aus der JP H08 261857 A ist ein Drucksensor zur Detektion eines Verbrennungsdrucks in einem Zylinder eines Verbrennungsmotors bekannt. Der Drucksensor umfasst drucksensitive Mittel zur Druckerfassung, welche zumindest einen Anschlusspunkt aufweisen, über den zumindest ein elektrisches Ausgangssignal abgreifbar ist, zumindest einen Schaltungsträger, auf dem eine Leiterplatte mit einem elektronischen Bauteil angeordnet ist. Zur Kontaktierung des Anschlusspunkts mit dem elektronischen Bauteil weist der Schaltungsträger zumindest eine dreidimensionale, außen liegende Leiterbahn auf. Zudem ist zumindest ein Kontaktmittel vorgesehen, über welches ein Ausgangssignal des elektronischen Bauteils abgreifbar ist. Das elektronische Bauteil ist über zumindest eine dreidimensionale, außen liegende Leiterbahn des Schaltungsträgers mit dem Kontaktmittel verbunden. Der Schaltungsträger weist einen halbmondförmigen Querschnitt auf, wobei an der flachen Oberfläche eine elektrisch isolierende Glas- oder Keramikschicht aufgebracht ist, auf welcher mehrere außen liegende Leiterbahnen angeordnet sind. Die Leiterbahnen weisen jeweils einen ersten Anschluss auf, welcher elektrisch mit der Leiterplatte verbunden ist. Zudem sind Leiterbahnen über Drähte mit Kontakten eines Anschlusssteckers des Drucksensors verbunden. Der Schaltungsträger ist fest mit einem Befestigungsflansch des Drucksensors, der Leiterplatte und dem Anschlussstecker des Drucksensors verbunden.

Aus der JP H08 201203 A ist ein Drucksensor mit einer Druckmesszelle bekannt welche zumindest einen Anschlusspunkt aufweist, über den zumindest ein elektrisches Ausgangssignal der Druckmesszelle abgreifbar ist. Der Drucksensor umfasst einen inneren Zylinder, der luftdicht mit einem Befestigungsflansch des Drucksensors verbunden ist und die Druckmesszelle vollständig umschließt. Der innere Zylinder weist elektrische Durchführungen auf, welche an einem Ende mit einem runden Schaltungsträger und am anderen Ende über Drähte mit Anschlusspunkten der Druckmesszelle verbunden sind. Eine Leiterplatte mit elektronischen Bauteilen ist senkrecht zum Schaltungsträger angeordnet und an diesem fixiert. Am anderen Ende der Leiterplatte ist eine parallel zum runden Schaltungsträger angeordnete Abstimmplatine an der Leiterplatte befestigt. Auf der Abstimmplatine sind Widerstände zur Sensorabstimmung angeordnet. Die Abstimmplatine ist über Drähte mit Kontakten eines Anschlusssteckers des Drucksensors verbunden.

Aus der EP 0 710 827 A2 ist ein Drucksensor zur Detektion eines Verbrennungsdrucks in einem Zylinder eines Verbrennungsmotors bekannt. Der Drucksensor umfasst eine Druckmesszelle, welche zumindest einen Anschlusspunkt aufweist, über den zumindest ein elektrisches Ausgangssignal der Druckmesszelle abgreifbar ist, zumindest einen Schaltungsträger, auf dem eine Leiterplatte mit einem elektronischen Bauteil angeordnet ist. Zur Kontaktierung des Anschlusspunkts mit dem elektronischen Bauteil weist der Schaltungsträger zumindest eine dreidimensionale, außen liegende Leiterbahn auf. Zudem ist zumindest ein Kontaktmittel vorgesehen, über welches ein Ausgangssignal des elektronischen Bauteils abgreifbar ist. Das elektronische Bauteil ist über zumindest eine dreidimensionale, außen liegende Leiterbahn des Schaltungsträgers mit dem Kontaktmittel verbunden. Der Schaltungsträger ist plattenförmig ausgebildet und weist an der Oberfläche eine elektrisch isolierende Glas- oder Keramikschicht auf, auf welcher mehrere außen liegende Leiterbahnen angeordnet sind. Die Leiterbahnen weisen jeweils einen ersten Anschluss auf, welcher elektrisch mit der Leiterplatte verbunden ist. Zudem sind die Leiterbahnen über Drähte entweder mit Anschlusspunkten der Druckmesszelle oder mit Kontakten eines Anschlusssteckers des Drucksensors verbunden. Der Schaltungsträger wird von einer halbzylinderförmigen metallischen Aufnahmevorrichtung gehalten. Die Aufnahmevorrichtung ist an einem Ende fest mit einem Befestigungsflansch der Druckmesszelle verbunden. Die feste Verbindung kann beispielsweise durch Einpressen in eine halbkreisförmige Nut des Befestigungsflansches oder durch Schweißen hergestellt werden. Zudem sind der Schaltungsträger und der Anschlussstecker des Drucksensors mit der Aufnahmevorrichtung verschweißt.

Es ist Aufgabe der vorliegenden Erfindung, eine Anschlusseinheit für eine Druckmesszelle anzugeben, welche Möglichkeiten zu einer weiteren Miniaturisierung unter Beibehaltung konventioneller Fertigungsmethoden gewährleistet. Diese Aufgabe wird durch die Merkmale des unabhängigen Anspruchs gelöst.

### Vorteile der Erfindung

Die erfindungsgemäße Anschlusseinheit für eine Druckmesszelle gemäß den Merkmalen des unabhängigen Anspruchs hat demgegenüber den Vorteil, dass sie besonders kompakt aufgebaut ist. Dadurch weist die Baugruppe große mechanische Festigkeit auf, was sich insbesondere im Austauschfall eines an der Druckmesszelle angeschlossenen Anbausteuergeräts positiv auswirkt. Weiterhin ermöglicht die Baugruppe eine trennbare Verbindung zwischen Druckmesszelle und Anbausteuergerät. Durch die kompakte Bauweise der Anschlusseinheit für die Druckmesszelle können auch Herstellkosten reduziert werden.

Der Schaltungsträger weist dreidimensionale, außen liegende Leiterbahnen auf. Über diese Leiterbahnen wird die Durchkontaktierung zwischen Druckmesszelle zur Leiterplatte bzw. von der Leiterplatte zu den Anschlusskontakten hergestellt. Diese Doppelfunktion des Schaltungsträgers, einerseits die Aufnahme der Leiterplatte, andererseits auch die Beinhaltung von Leiterbahnen, trägt weiterhin zur fortschreitenden Miniaturisierung der Anschlusseinheit für eine Druckmesszelle bei.

In einer zweckmäßigen Weiterbildung ist die Kontaktierung zwischen Druckmesszelle und Schaltungsträger bzw. Schaltungsträger und Platine/elektronische Bauelemente mittels Leitkleberpunkten vorgesehen. Insbesondere die Ausführung der Kontaktierung mittels Leitklebedome sorgt für eine sichere Leitkleber-Kontaktierung auch bei wechselnden Betriebstemperaturen.

In einer zweckmäßigen Weiterbildung ist im Schaltungsträger eine Öffnung oberhalb der Druckmesszelle vorgesehen, in welche ein Abdichtmittel, vorzugsweise ein Gel, eingebracht werden kann. Dieses Abdichtmittel dient als Passivierung zum Schutz der Messbrücke der Druckmesszelle vor Verschmutzung und Korrosion. Hierfür eignet sich insbesondere ein Gel, welches elastisch ist und die Messmembran der Druckmesszelle in deren Empfindlichkeit nicht beeinflusst.

In einer zweckmäßigen Weiterbildung sind Führungsmittel vorgesehen, welche eine genaue Positionierung einer Leiterplatte an dem Schaltungsträger unterstützen. Hierzu eignen sich insbesondere entsprechende Stege am Schaltungsträger, welche in die zugehörigen Ausnehmungen oder Öffnungen an der Leiterplatte eingreifen. Dadurch erleichtert sich wesentlich die Montage der sehr kleinen Komponenten. An diesem Führungsmittel, welches beispielsweise als Steg ausgebildet ist, kann an dessen Oberseite ein Fixierkleber aufgebracht werden zur dauerhaften Befestigung der Leiterplatte mit dem Schaltungsträger. Benachbart zu dem Zentriersteg befinden sich die Leitkleberdome, über welche die Leiterplatte mit der Druckmesszelle bzw. mit den Anschlusskontaktpunkten elektrisch leitend kontaktiert wird. Damit stellt sich ein definierter Abstand ein zwischen den Leitkleberdomen und der Unterseite der Leiterplatte.

Vorzugsweise wird der Schaltungsträger mittels MID-2K-Technik hergestellt, d. h. der spritzgegossene Schaltungsträger (Moulded Interconnected Device) besteht aus zwei Komponenten, beispielsweise aus einem galvanisierbaren Kunststoff, der teilweise mit einem zweiten, nicht galvanisierbaren Kunststoff überspritzt wird. Die teilweise hervorstehenden Oberflächen des Vorspritzlings werden durch einen galvanischen Prozess mit metallischer Oberfläche beschichtet, so dass die außenliegenden Leiterbahnen entstehen. Die Verwendung eines spritzgegossenen Schaltungsträgers eignet sich im vorliegenden Anwendungsfall besonders gut, da dank der verbesserten Gestaltungsfreiheit und der Integration von elektrischen und mechanischen Funktionen die Miniaturisierung der Anschlusseinheit für die Druckmesszelle vorangetrieben werden kann.

Wahlweise kann dieser Schaltungsträger auch durch laser direkt strukturierbares MID hergestellt werden. Der Schaltungsträger besteht dann aus einem Spritzgussteil, bei dem die Orte der Leiterbahnen mit Hilfe eines Lasers strukturiert wird und danach durch einen galvanischen Prozess mit metallischer Oberfläche beschichtet, so dass die außenliegenden Leiterbahnen entstehen.

In einer zweckmäßigen Weiterbildung ist vorgesehen, mittels Leitkleber eingeklebte Kontaktmittel, vorzugsweise Kontaktnieten, zu befestigen, welche als Kontaktflächen für eine trennbare elektrische Verbindung dienen. Dies trägt zur leichten Herstellbarkeit auf der einen Seite und zur lösbaren Verbindung von Drucksensor und Anbausteuergerät auf der anderen Seite bei.

In einer zweckmäßigen Weiterbildung ist eine vorzugsweise metallische Schutzhülse vorgesehen, die als mechanischer Schutz dem Verbiegung der Druckmesszelle insbesondere im Austauschfall entgegenwirkt und auch Überspannungen (beispielsweise ESD-Pulse) zum Befestigungsflansch hin ableitet. Dies erhöht die Robustheit der Anordnung in mechanischer und elektrischer Hinsicht gleichermaßen.

Weitere zweckmäßige Weiterbildungen ergeben sich aus weiteren abhängigen Ansprüchen und aus der Beschreibung.

### Zeichnung

Ein Ausführungsbeispiel der Anschlusseinheit für eine Druckmesszelle ist in der Zeichnung dargestellt und wird nachfolgend näher beschrieben. Es zeigen:

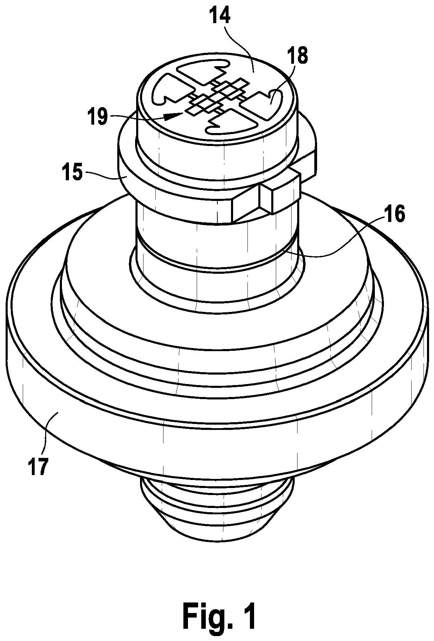

die Figur 1 einen Befestigungsflansch mit aufgeschweißter Druckmesszelle,
die Figur 2 einen Schaltungsträger in der Ansicht von unten,
die Figur 3 eine bestückte Platine vor dem Kleben auf den Schaltungsträger,
die Figur 4 die Rückseite der Leiterplatte mit zugehörigem Schaltungsträger in einer anderen Ansicht,
die Figur 5 den Schaltungsträger mit aufgeklebter Leiterplatte,
die Figur 6 die Zentrierstege zur Lagefixierung der Leiterplatte auf dem Schaltungsträger, sowie
die Figur 7 eine Schnittdarstellung durch die Anschlusseinheit mit aufgesetzter Schutzhülse.

Der hydraulische Druck eines magnetventilgesteuerten Fluids in einem Bremssystem wird durch eine Druckmesszelle 14 in ein elektrisches Signal umgesetzt. Hierzu ist die Druckmesszelle 14 auf einem Befestigungsflansch 17 so aufgesetzt, dass abhängig vom Druck des Fluids eine Membran der Druckmesszelle 14 verformt wird. Die Verformung der Membran wird von einer Messbrücke 19 erfasst. Die Druckmesszelle 14 besteht aus einem Träger 15, welcher im Wesentlichen rohrförmig ausgebildet ist. Weiterhin weist der Träger 15 in seinem Mittelabschnitt einen Flansch auf, welcher überwiegend ringförmig ausgeführt ist. Zur positionsgerechten Verbindung mit weiteren Bauteilen weist zumindest ein Abschnitt des Flansches des Trägers 15 eine vorzugsweise rechteckförmige Nase auf. An der im montierten Zustand vom Polkern entfernten Seite der Druckmesszelle 14 sind vier elektrische Kontaktpunkte 18 auf der Messbrücke 19 vorgesehen, über die die Ausgangssignale der Messbrücke 19 abgegriffen werden können. Der Träger 15 der Druckmesszelle 14 ist so ausgeprägt, dass seine Innenseite mit der Oberseite des Polkerns bzw. mit dem Befestigungsflansch 17 formschlüssig zusammenwirkt. Der Träger 15 wird auf den Befestigungsflansch 17 aufgesetzt und durch eine Schweißung, vorzugsweise eine Laserschweißung 16 druckdicht mit diesem verbunden.

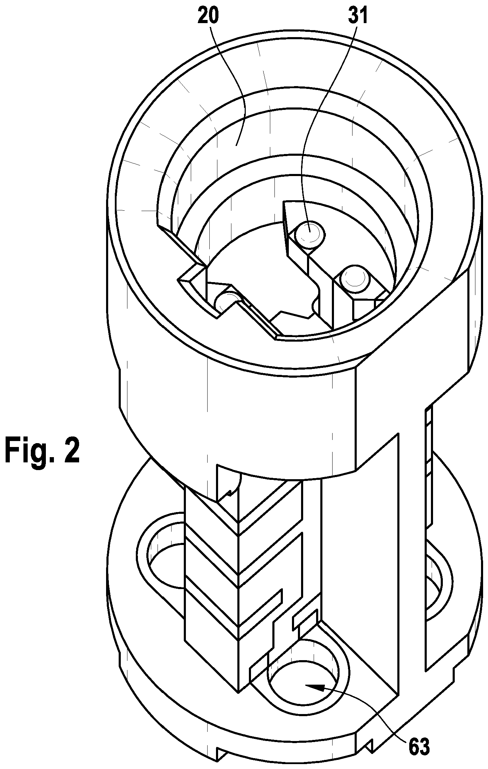

Auf die Druckmesszelle 14 wird ein Schaltungsträger 20 aufgesetzt. Der Schaltungsträger 20 ist im Wesentlichen zylinderförmig ausgeführt mit einem rechteckförmigen mittleren Abschnitt zur Aufnahme der Leiterplatte 32. Die Innenkontur des unteren Abschnitts des Schaltungsträgers 20 - wie in Figur 2 oben gezeigt - ist zur mechanischen Verbindung auf die Außenkontur der Druckmesszelle 14 abgestimmt und umschließt diese zumindest teilweise. Der Schaltungsträger 20 weist hierzu im unteren Bereich der zylinderförmigen Kontur eine Schulter auf, welche im montieren Zustand auf dem Flansch des Trägers 15 aufsitzt. Zur elektrischen Kontaktierung der Kontaktpunkte 18 der Druckmesszelle 14 mit Leiterbahnen 47 des Schaltungsträgers 20 sind vier Dome 31 ausgebildet, auf deren Oberseite zur elektrischen Kontaktierung und mechanischen Befestigung von Druckmesszelle 14 und Schaltungsträger 20 Leitkleber aufgebracht wird. Der untere zylindrische Bereich des Schaltungsträgers 20 wird abgeschlossen durch zwei gegenüberliegende Zentrierstege 37, die in zur Druckmesszelle 14 entgegengesetzter Achsichtung überstehen. Im oberen Bereich des unteren zylindrischen Abschnitts des Schaltungsträgers 20 ist zudem eine Öffnung 60 vorgesehen, in welche ein Abdichtmittel 59, beispielsweise ein Gel, eingebracht werden kann, um so die darunter liegende Messbrücke 19 vor Umwelteinflüssen zu schützen. Nach oben hin geht der zylindrische Bereich des Schaltungsträgers 20 in einen rechteckförmigen Bereich über, an dessen einer Seite im mittleren Abschnitt in Achsrichtung ein Mittelsteg 41 vorgesehen ist, auf dessen außen liegender Seite ein Fixierkleber 43 aufgebracht werden kann zur Befestigung der Leiterplatte 32 mit dem Schaltungsträger 20. Weiterhin sind auf der Seite des rechteckförmigen Bereichs des Schaltungsträgers 20, die der Aufnahme der Leiterplatte 32 dient, acht Leitkleberdome 45 vorgesehen. Diese stehen gegenüber dem rechteckförmigen Grundkörper des Schaltungsträgers 20 etwas nach außen über. Sie werden mit Leitkleber versehen zur elektrischen Kontaktierung der Leiterplatte 32 mit den Leiterbahnen 47.

Nach oben hin läuft der Schaltungsträger 20 wiederum zylinderförmig aus. Es sind vier Öffnungen 63 vorgesehen, die der Aufnahme von Kontaktmitteln 51, welche nietenförmig ausgeführt sind, dienen. Die Öffnungen 63 werden mit Leitkleberflächen 49 versehen zur Kontaktierung der Kontaktmittel 51 mit den jeweiligen Leiterbahnen 47 mittels Leitkleber. Am oberen zylinderförmigen Bereich des Schaltungsträgers 20 ist in Verlängerung zu dem Mittelsteg 41 ein mittlerer Zentriersteg 38 vorgesehen, welcher mit einer mittleren Zentrierhilfe 36, nämlich eine vorzugsweise u-förmigen Aussparung in der Leiterplatte 32, zusammenwirkt.

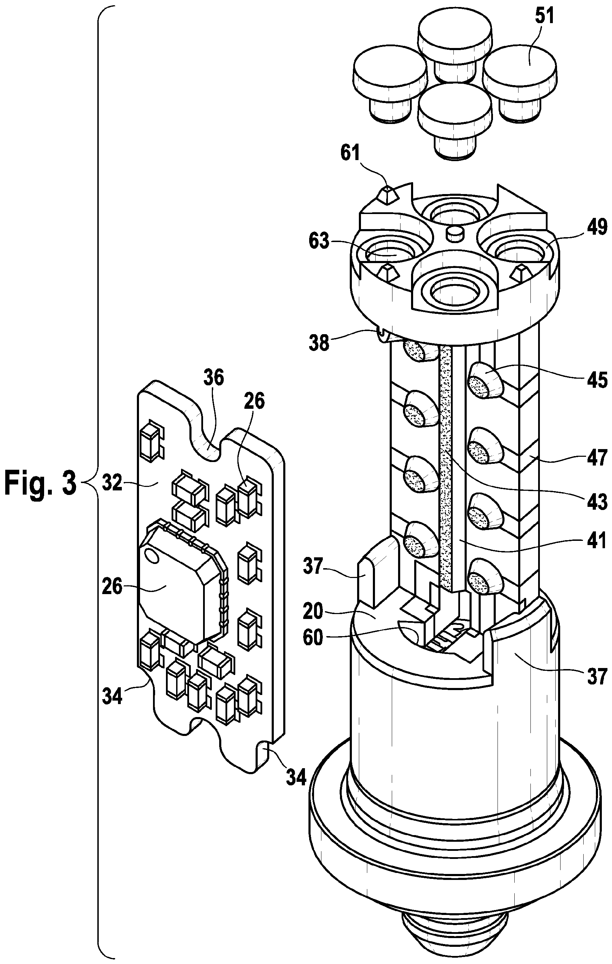

In Figur 3 ist die bestückte Leiterplatte 32 zu sehen, auf der elektronische Bauteile 26, wie beispielsweise eine integrierte Schaltung, Widerstände, Kondensatoren etc. angeordnet sind. Im unteren Bereich weist die Leiterplatte 32 seitliche Aussparungen 34 auf, welche mit den äußeren Zentrierstegen 37 des Schaltungsträgers 20 zusammenwirken. Weiterhin ist auch im unteren, mittleren Bereich der Leiterplatte 32 eine Aussparung zur Zentrierung vorgesehen.

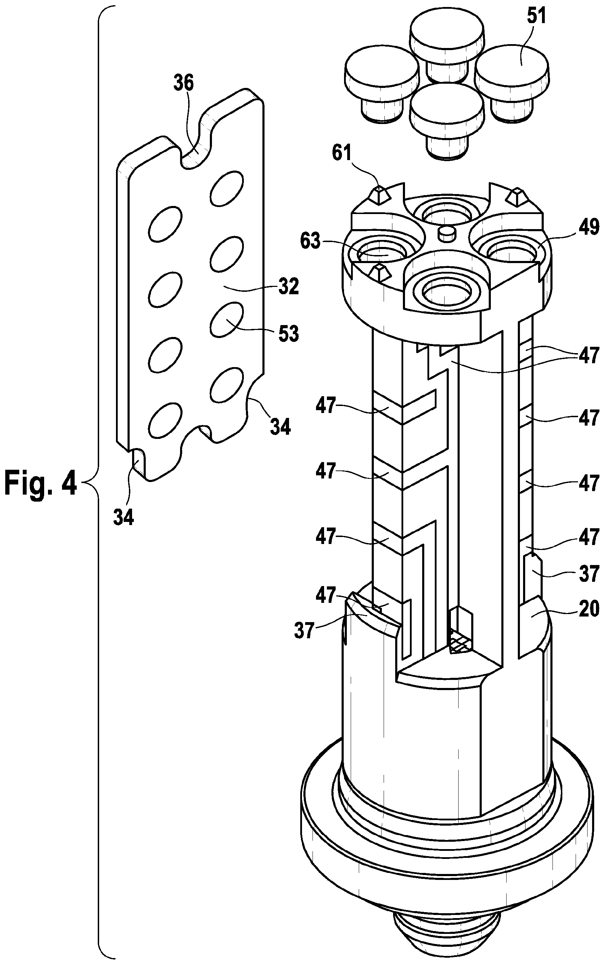

In Figur 4 ist die Rückseite der Leiterplatte 32 zu sehen. Hier sind acht Leitkleberflächen 53 vorgesehen, über die vier eingehenden Signale der Druckmesszelle 14 und die vier ausgehenden Signale, die an die Kontaktmittel 51 weitergegeben werden, geführt werden. In dem rechteckförmigen Bereich des Schaltungsträgers 20 sind in dieser Ansicht die Leiterbahnen 47, welche außenliegend ausgeführt sind, zu sehen. Über diese Leiterbahnen 47 werden die Leitkleberflächen 53 der Leiterplatten 32 mit den Kontaktpunkten 18 der Messbrücke 19 verbunden, die vier anderen Leitkleberflächen 53 werden darüber mit den vier Kontaktmitteln 51 bzw. deren Leitkleberflächen 49 elektrisch leitend verbunden.

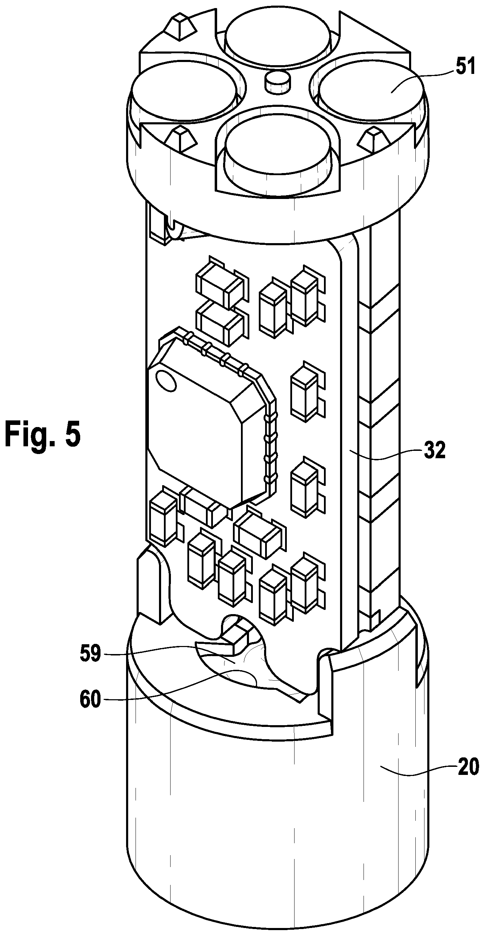

In Figur 5 ist die Leiterplatte 32 im montierten Zustand gezeigt. Weiterhin wird die Öffnung 60 sichtbar, die der Aufnahme des Abdichtmittels 59, beispielsweise ein Gel, dient. Weiterhin sind auch die Kontaktmittel 51 in die entsprechenden Öffnungen 63 des Schaltungsträgers 20 eingeführt.

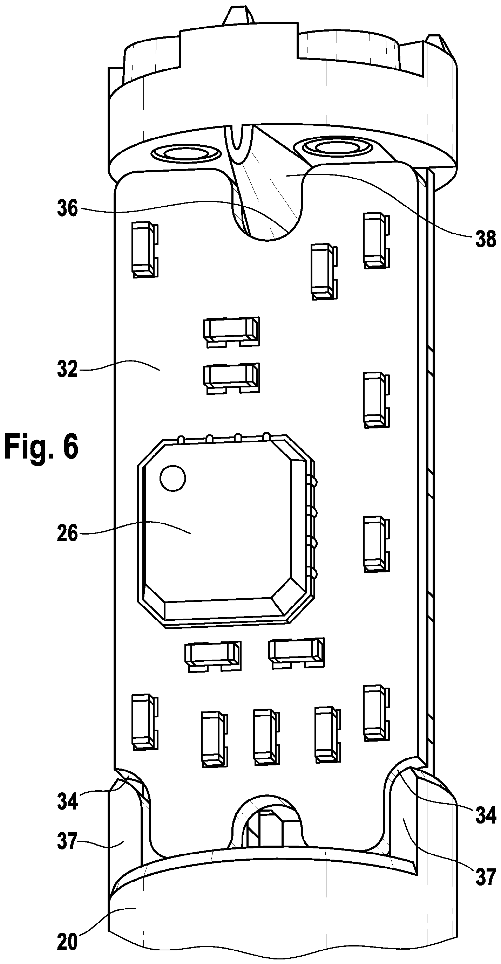

Gemäß Figur 6 ist noch genauer erkennbar, wie der mittlere Zentriersteg 38 mit der mittlere Zentrierhilfe 36 der Leiterplatte 32 sowie die äußeren Zentrierstege 37 mit den äußeren Zentrierhilfen 34 an der Leiterplatte 32 zusammenwirken. Weiterhin wird deutlich, dass der mittlere Zentriersteg 38 in Richtung zum rechteckförmigen Abschnitt des Schaltungsträgers 20 hin bezüglich seines Außenumfangs zunimmt, so dass ein leichtes Einführen der Leiterplatte 32 möglich wird. Beim Endanschlag wird die exakte Position der Leiterplatte 32 gegenüber dem Schaltungsträger 20 erreicht.

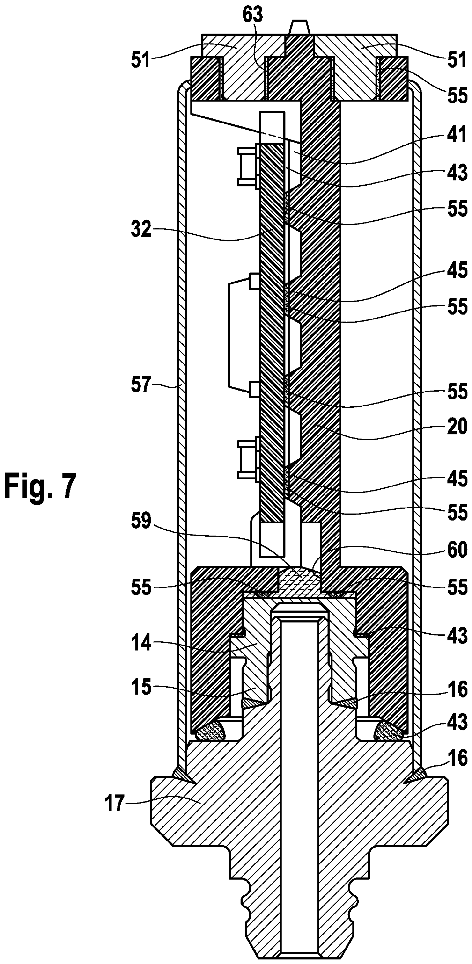

Gemäß Figur 7 sind die Komponenten im montierten Zustand gezeigt. So ist der Schaltungsträger 20 durch einen Fixierkleber 43 mit dem Befestigungsflansch 17 mechanisch fest verbunden. Die Druckmesszelle 14 umschließt nach oben hin den Befestigungsflansch 17 und ist auf einer Schulter desselben so angeordnet, dass der über eine Bohrung herausgeführte Fluiddruck durch die nicht näher bezeichnete Membran der Druckmesszellen in entsprechende Ausgangssignale der Messbrücke 19 umgesetzt wird. Der Schaltungsträger 20 umschließt die Druckmesszelle 14 zumindest teilweise von oben. Nach oben hin ist in dem Schaltungsträger 20 die Öffnung 60 vorgesehen, welche den zylinderförmigen unteren Bereich des Schaltungsträgers 20 abschließt. In diese Öffnung 60 ist ein Abdichtmittel 59 eingebracht. Weiterhin sind die Kontaktpunkte 18 der Messbrücke 19 über Leitkleber 55 mit jeweils einer außen liegenden Leiterbahn 47 des Schaltungsträgers 20 elektrisch leitend kontaktiert. Die Leiterplatte 32 ist mittels Fixierkleber 43 mit dem Mittelsteg 41 des Schaltungsträgers 20 verbunden. Die elektrische Kontaktierung der Leiterplatte 32 mit den Leiterbahnen 47 erfolgt über an den Oberseiten der Dome 45 aufgebrachtem Leitkleber 55. Im oberen zylinderförmigen Bereich des Schaltungsträgers 20 sind vier Öffnungen 63 vorgesehen zur Aufnahme der nietenförmigen Kontaktmittel 51. Die Kontaktmittel 51 sind mit dem Schaltungsträger 20 durch Leitkleber 55 verbunden. Jedem der vier Kontaktmittel 51 wird jeweils eine Leiterbahn 47 zugeführt und mittels Leitklebers 55 elektrisch leitend über die Leitkleberflächen 49 kontaktiert. Weiterhin ist eine Schutzhülse 57 vorgesehen, welche den Schaltungsträger 20 mit bestückter Leiterplatte 32 umschließt. Die Schutzhülse 57 ist mittels Laserschweißung 16 mit dem Befestigungsflansch 17 verbunden. Die Kontaktmittel 51 bleiben jedoch weiterhin zugänglich. An der Oberseite des Schaltungsträgers 20 stehen Montagehilfen 61 in axialer Richtung hervor, die das Überstülpen der Schutzhülse 57 über den Schaltungsträger 20 durch eine entsprechende abschrägende Führung erleichtern.

Die in den Figuren gezeichte Anschlusseinheit für eine Druckmesszelle 14 arbeitet wie folgt. Der hydraulische Druck in einem Bremssystem wird durch die beispielsweise auf dem Magnetventil sitzende Druckmesszelle 14 in ein elektrisches Signal umgesetzt. Das elektrische Signal wird durch eine integrierte Schaltung als Beispiel für ein elektronisches Bauteil 26 aufbereitet und verstärkt an ein Steuergerät weitergeleitet. Die Druckmesszelle 14 weist eine Membran auf, die den Druck des Fluids erfasst. Im Inneren des Polkerns des Ventils ist ein mit Fluid gefüllter Kanal ausgebildet, der im Inneren des Befestigungsflansches 17 liegt. Dieser Kanal wird durch die Membran druckdicht verschlossen. Die Druckverhältnisse der Membran werden durch die Messbrücke 19 in entsprechende elektrische Signale umgesetzt. Der Befestigungsflansch 17 wird in dem Hydraulikblock durch Einpressen (Self Clinch) dauerhaft befestigt.

Der Schaltungsträger 20 wird vorzugsweise in sogenannter MID-2K-Technik ausgebildet. Er ist als spritzgegossener Schaltungsträger 20 aus Kunststoff in MID-Technik (Moulded Interconnected Device) hergestellt, insbesondere im Zweikomponentenspritzguss. Durch MID-Technik lassen sich dreidimensionale Schaltungsstrukturen realisieren. Ein Kunststoff-Vorspritzling aus galvanisierbarem Kunststoff wird mit einem zweiten, nicht galvanisierbaren Kunststoff teilweise überspritzt. Die teilweise hervorstehenden Oberflächen des Vorspritzlings werden durch einen galvanischen Prozess mit einer metallischen Oberfläche beschichtet, so dass dreidimensionale außen liegende Leiterbahnen 47 entstehen. Der Schaltungsträger 20 zeichnet sich durch hohe Gestaltungsfreiheit aus insbesondere durch die Integration elektrischer und mechanischer Funktionen. Dadurch lässt sich die Anschlusseinheit für die Druckmesszelle 14 besonders kompakt aufbauen.

Über diese dreidimensionalen außen liegenden Leiterbahnen 47 erfolgt nun die Kontaktierung der Kontaktpunkte 18 der Messbrücke 19 mit der Leiterplatte 32. Der elektrische Kontakt zwischen den jeweiligen Leiterbahnen 47 und den Kontaktpunkten 18 stellt ein Leitkleber 55 her, wie in Figur 7 angedeutet. Die jeweiligen Leiterbahnen 47 werden elektrisch leitend kontaktiert mit den Leitkleberflächen 53 auf der Rückseite der Leiterplatte 32 über die Leitkleberdome 45. In derselben Art und Weise werden die Ausgangssignale der integrierten Schaltung von der Leiterplatte 32 an die Kontaktmittel 51 geführt. So werden die Ausgangssignale wiederum über die entsprechenden Leitkleberflächen 53 mit den Leitkleberdomen 45 mittels Leitkleber 55 kontaktiert. Die mit dem jeweiligen Dom 45 in elektrischem Kontakt stehende außen liegende Leiterbahn 47 wird auf den mittleren Abschnitt in Richtung zu den jeweiligen Öffnungen des oberen zylinderförmigen Bereichs des Schaltungsträgers 20 geführt. Die Außenseiten der Öffnungen 63 sind wiederum als Leitkleberflächen 49 ausgeführt, um eine elektrische Kontaktierung zwischen den jeweiligen Leiterbahnen 47 und den Kontaktmitteln 51 zu gewährleisten. Wiederum erfolgt die elektrische Kontaktierung zwischen den Kontaktmitteln 51 und den Leitkleberflächen 49 über Leitkleber 55. Diese als Kontaktnieten ausgeführte Kontaktmittel 51 stellen dann die Kontaktflächen her für eine trennbare elektrische Verbindung. Der nicht gezeigte Gegenpart besteht beispielsweise aus vier Kotaktfedern oder Federstiften, welche im elektrischen Steuergerät verankert sind.

Die aufgeschweißte Schutzhülle 57 besteht aus Metall und dient zum einen als mechanischer Schutz gegen Verbiegen der Druckmesszelle 14. Andererseits kann sie auch auftretende Überspannungen, beispielsweise ESD-Pulse, zum Befestigungsflansch 17 hin ableiten. Die drei pyramidenförmigen Montagehilfen 61 dienen als Montage-Zentrierhilfe, um die Schutzhülse 57 gut fügen zu können.

Die beschriebene Anschlusseinheit für eine Druckmesszelle 14 eignet sich insbesondere für den Einsatz bei Bremsystemen in Kraftfahrzeugen, ist jedoch hierauf nicht eingeschränkt. Insbesondere bei Bremssystemen der Premiumklasse kommen eine Vielzahl von Drucksensoren zum Einsatz bei nur begrenztem Bauraum. Ein bauraumminimierter Drucksensor eignet sich daher gerade für diese Anwendung.

## Patentansprüche

1. Anschlusseinheit mit einer Druckmesszelle (14), wobei die Druckmesszelle (14) insbesondere einen Druck eines Hydraulikblocks erfasst und zumindest einen Anschlusspunkt (18) aufweist, über den zumindest ein elektrisches Ausgangssignal der Druckmesszelle (14) abgreifbar ist, mit einer Leiterplatte (32) und mit einem Schaltungsträger (20), auf dem zumindest die Leiterplatte (32) mit elektronischem Bauteil (26) angeordnet ist, wobei der Schaltungsträger (20) zur Kontaktierung des Anschlusspunkts (18) mit dem elektronischen Bauteil (26) zumindest eine dreidimensionale, außen liegende Leiterbahn (47) aufweist,
wobei zumindest ein Kontaktmittel (51) vorgesehen ist, über welches ein Ausgangssignal des elektronischen Bauteils (26) abgreifbar ist und
wobei das elektronische Bauteil (26) über die zumindest eine dreidimensionale, außen liegende Leiterbahn (47) des Schaltungsträgers (20) mit dem Kontaktmittel (51) verbunden ist, **dadurch gekennzeichnet,**
**dass** der Schaltungsträger (20) spritzgegossen ausgeführt und auf die Druckmesszelle (14) aufgesetzt ist,
wobei der Schaltungsträger (20) im Wesentlichen zylinderförmig mit einem unteren zylindrischen Bereich und einem oberen zylindrischen Bereich ausgeführt ist, welche über einen rechteckförmigen mittleren Abschnitt miteinander verbunden sind und
wobei eine Innenkontur des unteren zylindrischen Bereichs des Schaltungsträgers (20) zur mechanischen Verbindung auf eine Außenkontur der Druckmesszelle (40) abgestimmt ist und diese zumindest teilweise umschließt.

2. Anschlusseinheit nach Anspruch 1, **dadurch gekennzeichnet, dass** der Schaltungsträger (20) zumindest einen Leitkleberdom (45) aufweist zur elektrischen Kontaktierung der Leiterbahn (47) mit zumindest einer Leitkleberfläche (53) der Leiterplatte (32).

3. Anschlusseinheit nach einem der vorhergehenden Ansprüche, **dadurch gekennzeichnet, dass** im Schaltungsträger (20) zumindest eine Öffnung (63) vorgesehen ist zur Aufnahme des Kontaktmittels (51).

4. Anschlusseinheit nach Anspruch 3, **dadurch gekennzeichnet, dass** die Öffnung (63) zumindest teilweise umgeben ist von einer Leitkleberfläche (49) zur Kontaktierung des Kontaktmittels (51) mit der Leiterbahn (47) mittels Leitkleber (55).

5. Anschlusseinheit nach einem der vorhergehenden Ansprüche, **dadurch gekennzeichnet, dass** der Schaltungsträger (20) zumindest einen Zentriersteg (37, 38) aufweist, welcher zur Zentrierung mit der Leiterplatte (32) zusammenwirkt.

6. Anschlusseinheit nach einem der vorhergehenden Ansprüche, **dadurch gekennzeichnet, dass** in dem Schaltungsträger (20) zumindest eine Öffnung (60) vorgesehen ist zur Aufnahme eines Abdichtmittels (59), insbesondere eines Gels.

7. Anschlusseinheit nach einem der vorhergehenden Ansprüche, **dadurch gekennzeichnet, dass** der Schaltungsträger (20) zumindest aus einem Kunststoff-Vorspritzling aus galvanisierbarem Kunststoff und einem zweiten, nicht galvanisierbaren Kunststoff besteht, wobei die Leiterbahnen (47) gebildet werden, indem ein galvanischer Prozess mit metallischer Oberflächenbeschichtung verwendet ist.

8. Anschlusseinheit nach einem der vorhergehenden Ansprüche, **dadurch gekennzeichnet, dass** der Schaltungsträger (20) zumindest einen Mittelsteg (41) aufweist, auf den ein Fixierkleber (43) zur Befestigung der Leiterplatte (32) auftragbar ist.

9. Anschlusseinheit nach einem der vorhergehenden Ansprüche, **dadurch gekennzeichnet, dass** eine Schutzhülse (57) vorgesehen ist, die den Schaltungsträger (20) zumindest teilweise umschließt.

10. Anschlusseinheit nach Anspruch 9, **dadurch gekennzeichnet, dass** zumindest eine Montagehilfe (61) vorgesehen ist zur Führung der Schutzhülse (57).

## Claims

1. Connection unit comprising a pressure measuring cell (14), wherein the pressure measuring cell (14) detects, in particular, a pressure of a hydraulic block and has at least one connection point (18) via which at least one electrical output signal of the pressure measuring cell (14) can be tapped off, comprising a printed circuit board (32) and comprising a circuit carrier (20) on which at least the printed circuit board (32) with an electronic component (26) is arranged, wherein the circuit carrier (20), for the purpose of contact to be made with the connection point (18) by the electronic component (26), has at least one three-dimensional, external conductor track (47), wherein at least one contact means (51) is provided, via which contact means an output signal of the electronic component (26) can be tapped off, and wherein the electronic component (26) is connected to the contact means (51) via the at least one three-dimensional, external conductor track (47) of the circuit carrier (20), **characterized in that** the circuit carrier (20) is of injection-moulded design and is mounted onto the pressure measuring cell (14), wherein the circuit carrier (20) is of substantially cylindrical design with a lower cylindrical region and an upper cylindrical region, which lower cylindrical region and upper cylindrical region are connected to one another via a rectangular middle section, and wherein an inner contour of the lower cylindrical region of the circuit carrier (20), for mechanical connection purposes, is matched to an outer contour of the pressure measuring cell (40) and at least partially surrounds the said pressure measuring cell.

2. Connection unit according to Claim 1, **characterized in that** the circuit carrier (20) has at least one conductive adhesive dome (45) for electrical contact to be made with the conductor track (47) by at least one conductive adhesive surface (53) of the printed circuit board (32).

3. Connection unit according to either of the preceding claims, **characterized in that** at least one opening (63) is provided in the circuit carrier (20) for the purpose of receiving the contact means (51).

4. Connection unit according to Claim 3, **characterized in that** the opening (63) is at least partially surrounded by a conductive adhesive surface (49) for contact to be made with the contact means (51) by the conductor track (47) by means of conductive adhesive (55).

5. Connection unit according to one of the preceding claims, **characterized in that** the circuit carrier (20) has at least one centring web (37, 38) which interacts with the printed circuit board (32) for centring purposes.

6. Connection unit according to one of the preceding claims, **characterized in that** at least one opening (60) is provided in the circuit carrier (20) for the purpose of receiving a sealing means (59), in particular a gel.

7. Connection unit according to one of the preceding claims, **characterized in that** the circuit carrier (20) at least comprises a plastic injection-moulding preform composed of galvanizable plastic and a second, non-galvanizable plastic, wherein the conductor tracks (47) are formed by a galvanic process with metal surface coating being used.

8. Connection unit according to one of the preceding claims, **characterized in that** the circuit carrier (20) has at least one middle web (41) to which a fixing adhesive (43) for fastening the printed circuit board (32) can be applied.

9. Connection unit according to one of the preceding claims, **characterized in that** a protective sleeve (57) is provided, which protective sleeve at least partially surrounds the circuit carrier (20).

10. Connection unit according to Claim 9, **characterized in that** at least one mounting aid (61) is provided for the purpose of guiding the protective sleeve (57).

## Revendications

1. Module de raccordement pourvu d'une cellule de mesure d'une pression (14), la cellule de mesure d'une pression (14) détectant notamment une pression d'un bloc hydraulique et comportant au moins un point de raccordement (18) par l'intermédiaire duquel au moins un signal de sortie électrique de la cellule de mesure d'une pression (14) peut être prélevé, pourvu d'un circuit imprimé (32) et d'un support de circuit (20), sur lequel est placé au moins le circuit imprimé (32) avec composant électronique (26), pour contacter le point de raccordement (18), le support de circuit (20) avec le composant électronique (26) comportant au moins une piste conductrice (47) tridimensionnelle, située à l'extérieur, au moins un moyen de contact (51) étant prévu, par l'intermédiaire duquel un signal de sortie du composant électronique (26) peut être prélevé et le composant électronique (26) étant relié avec le moyen de contact (51) par l'intermédiaire de l'au moins une piste conductrice (47) tridimensionnelle, située à l'extérieur du support de circuit (20), **caractérisé en ce que** le support de circuit (20) est réalisé par moulage par injection et est posé sur la cellule de mesure d'une pression (14), le support de circuit (20) étant sensiblement de forme cylindrique avec une zone cylindrique inférieure et une zone cylindrique supérieure, lesquelles sont reliées l'une à l'autre par l'intermédiaire d'un tronçon central de forme rectangulaire et un contour interne de la zone cylindrique inférieure du support de circuit (20) étant adapté pour un assemblage mécanique sur un contour externe de la cellule de mesure d'une pression (40) et entourant cette dernière au moins en partie.

2. Module de raccordement selon la revendication 1, **caractérisé en ce que** le support de circuit (20) comporte au moins un dôme de colle conductrice (45), destiné à mettre en contact électrique la piste conductrice (47) avec au moins une surface de colle conductrice (53) du circuit imprimé (32).

3. Module de raccordement selon l'une quelconque des revendications précédentes, **caractérisé en ce que** dans le support de circuit (20) est prévu au moins un orifice (63), destiné à recevoir le moyen de contact (51).

4. Module de raccordement selon la revendication 3, **caractérisé en ce que** l'orifice (63) est entouré au moins partiellement d'une surface de colle conductrice (49), destinée à contacter le moyen de contact (51) avec la piste conductrice (47) au moyen de la colle conductrice (55).

5. Module de raccordement selon l'une quelconque des revendications précédentes, **caractérisé en ce que** le support de circuit (20) comporte au moins une barrette de centrage (37, 38) qui pour le centrage, coopère avec le circuit imprimé (32).

6. Module de raccordement selon l'une quelconque des revendications précédentes, **caractérisé en ce que** dans le support de circuit (20) est prévu au moins un orifice (60), destiné à recevoir un moyen d'étanchéité (59), notamment un gel.

7. Module de raccordement selon l'une quelconque des revendications précédentes, **caractérisé en ce que** le support de circuit (20) est constitué d'au moins une ébauche en matière plastique pré-injectée en une matière plastique galvanisable et en une deuxième matière plastique non galvanisable, les pistes conductrices (47) étant créées en utilisant un processus de galvanisation avec revêtement de surface métallique.

8. Module de raccordement selon l'une quelconque des revendications précédentes, **caractérisé en ce que** le support de circuit (20) comporte au moins une barrette centrale (41) sur laquelle peut être appliquée une colle de fixation (43), destinée à fixer le circuit imprimé (32).

9. Module de raccordement selon l'une quelconque des revendications précédentes, **caractérisé en ce qu'**il est prévu une douille protectrice (57) qui entoure au moins en partie le support de circuit (20) .

10. Module de raccordement selon la revendication 9, **caractérisé en ce qu'**il est prévu au moins un auxiliaire de montage (61), destiné à guider la douille protectrice (57).
